# EUROPÄISCHE PATENTSCHRIFT

(11) **EP 3 988 395 B1**
(45) Veröffentlichungstag und Bekanntmachung des Hinweises auf die Patenterteilung: **12.07.2023**
(21) Anmeldenummer: 20203157.1
(22) Anmeldetag: 21.10.2020
(51) Int. Cl.: B60R 9/045

(54) **NIVELLIERBARER DACHZELTTRÄGER FÜR EINEN PERSONENWAGEN**
HEIGHT ADJUSTABLE FRAME FOR TENT FIXED ON THE ROOF OF A VEHICLE
CADRE AJUSTABLE POUR UNE TENTE DISPOSÉE SUR LE TOIT D'UN VÉHICULE

(43) Veröffentlichungstag der Anmeldung: 27.04.2022
(73) Patentinhaber: STF Consulting GmbH, 8807 Freienbach SZ (CH)
(72) Erfinder: FAES, Stefan, 9652 Ebnat-Kappel (CH)
(74) Vertreter: Prins Intellectual Property AG

(56) Entgegenhaltungen:
- WO-A2-2007/059540
- BE-A- 515 957
- DE-U1- 29 618 352
- FR-A- 1 043 535
- US-A- 3 002 664

## Beschreibung

### Technisches Gebiet

Die Erfindung betrifft einen Dachzeltträger für einen Personenwagen umfassend eine vordere Querstrebe und eine hintere Querstrebe, wobei die vordere Querstrebe und die hintere Querstrebe jeweils an beiden Enden eine Befestigungsvorrichtung zur Befestigung der Querstreben direkt am Personenwagendach oder an zwei fest am Personenwagendach montierten Dachrelingen aufweist.

### Technischer Hintergrund

Dachzelte, welche auf einem Personenwagendach montiert werden, sind seit längerem bekannt. Diese weisen in der Regel eine Zeltplattform auf, welche mittels eines Dachträgers auf dem Personenwagendach befestigt werden.

Dabei besteht der Dachträger meist aus zwei Querstreben, die jeweils beidseitig direkt am Personenwagendach oder an zwei auf dem Personenwagendach fest montierten Dachrelingen befestigt sind. An der dem Personenwagen zugewandten Seite der Zeltplattform sind typischerweise zwei parallele Tragschienen montiert, mit denen das Dachzelt am Dachträger befestigt wird.

DE202012005115 beschreibt eine Gepäckträgervorrichtung zur Anbringung auf Personenwagendächern mit einer ebenen Plattform, auf welcher ein Dachzelt untergebracht werden kann. Die Plattform weist beidseitig mehr als zwei Trägerfüsse auf, mit welchen sie am Personenwagendach befestigt ist. Damit die ebene Plattform auf einem gewölbten Personenwagendach montierbar ist, sind die Trägerfüsse um maximal 5 cm höhenverstellbar ausgestaltet. Ähnliche Trägervorrichtungen zur Ausgleichung einer Dachwölbung sind aus US3672549 und US3685061 bekannt. BE515957A offenbart eine Fahrzeugdachkonstruktion umfassend eine vordere Querstrebe und eine hintere Querstrebe, wobei die vordere Querstrebe und die hintere Querstrebe jeweils an beiden Enden eine Befestigungsvorrichtung zur Befestigung der Querstreben direkt am Personenwagendach oder an zwei fest am Personenwagendach montierten Dachrelingen aufweist, wobei die Fahrzeugdachkonstruktion weiter eine Oberkonstruktion, zwei vordere Hebeeinrichtungen und zwei hintere Hebeeinrichtungen aufweist.

Damit sich im Dachzelt gut schlafen lässt, wird das Fahrzeug jeweils auf einem ebenen, möglichst horizontalen Untergrund geparkt. Ist der Untergrund leicht unebenen oder weist eine leichte Neigung auf, werden Auffahrkeile eingesetzt, um den Personenwagen in eine möglichst horizontale Lage zu bringen. Diese ist jeweils eine aufwendige und zeitintensive Arbeit. Auch ist es bei grösseren Neigungen und Unebenheiten kaum möglich, den Personenwagen in eine horizontale Lage zu bringen.

### Darstellung der Erfindung

Eine Aufgabe der Erfindung ist es, einen Dachzeltträger für ein Personenwagendach anzugeben, welcher die Probleme des Standes der Technik nicht aufweist.

Diese Aufgabe wird durch einen Dachzeltträger für einen Personenwagen mit den Merkmalen des Anspruchs 1 gelöst.

Der Dachzeltträger umfasst eine vordere Querstrebe und eine hintere Querstrebe. Die vordere Querstrebe und die hintere Querstrebe weisen jeweils an beiden Enden eine Befestigungsvorrichtung zur Befestigung der Querstreben direkt am Personenwagendach oder an zwei fest am Personenwagendach montierten Dachrelingen auf. Weiter umfasst der Dachzeltträger eine nivellierbare Oberkonstruktion, auf welcher ein Zelt montiert oder montierbar ist, zwei vordere Hebeeinrichtungen und zwei hintere Hebeeinrichtungen. Die zwei vorderen Hebeeinrichtungen und die zwei hinteren Hebeeinrichtungen sind zur Nivellierung der Oberkonstruktion jeweils zwischen der Oberkonstruktion und der vorderen Querstrebe respektive der hinteren Querstrebe angeordnet.

Die Hebeeinrichtungen sind jeweils unabhängig voneinander höhenverstellbar, so dass die Oberkonstruktion bzw. das Dachzelt bei einem nicht horizontal geparkten Personenwagen durch Verstellen der jeweiligen Hebeeinrichtung in eine horizontale Lage bringbar ist. Ein aufwendiges und zeitintensives Nivellieren des Personenwagens ist nicht mehr notwendig.

Im fahrbereiten Zustand des Personenwagens sind die Hebeeinrichtungen in ihrer tiefsten Stellung und die Oberkonstruktion liegt möglichst nahe am Personenwagendach. Eine allfällige Neigung der Oberkonstruktion gegenüber einem horizontalen Untergrund spielt dabei keine Rolle. Wird der Personenwagen auf einem horizontalen Untergrund geparkt und die Oberkonstruktion bzw. das Dachzelt ist aufgrund einer allfälligen Dachwölbung oder Wölbung der Dachrelinge leicht geneigt, weil z.B. die vordere und die hintere Querstreben nicht auf gleicher Höhe liegen, lässt sich die Oberkonstruktion bzw. das Dachzelt dennoch mit den Hebeeinrichtungen leicht nivellieren.

Bevorzugte Ausführungsarten der Erfindung sind in den abhängigen Ansprüchen angegeben.

In einigen Ausführungsformen kann die Oberkonstruktion eine Zeltplattform sein, welche mit den zwei vorderen Hebeeinrichtungen und mit den zwei hinteren Hebeeinrichtungen verbunden ist. Ein Dachzelt kann dabei auf der Zeltplattform befestigt sein.

In einigen Ausführungsformen kann die Oberkonstruktion eine erste, obere Querstrebe, die mit den zwei vorderen Hebeeinrichtungen verbunden ist, und eine zweite, obere Querstrebe, die mit den zwei hinteren Hebeeinrichtungen verbunden ist, umfassen. Diese Ausführungsform ist insbesondere für herkömmliche Dachzelte geeignet, welche an herkömmlichen Dachträgern in Form von zwei Querstreben befestigt werden.

In einigen Ausführungsformen kann die Oberkonstruktion zwei seitliche Längsstreben umfassen, die jeweils mit einer hinteren Hebeeinrichtung und einer vorderen Hebeeinrichtung verbunden sind.

In einigen Ausführungsformen können die Hebeeinrichtungen jeweils um mindestens 15 cm, vorzugsweise mindestens 20 cm höhenverstellbar ausgebildet sein. Auf diese Weise kann die Zeltplattform auch bei sehr unebenen oder stark geneigten Untergründen einfach nivelliert werden.

In einigen Ausführungsformen kann die Zeltplattform gelenkig auf den jeweiligen Hebeeinrichtungen gelagert sein, um unerwünschten Spannungen in der Zeltplattform oder deren Befestigungspunkten beim Nivellieren zu vermeiden.

In einigen Ausführungsformen kann die Hebeeinrichtung stufenlos höhenverstellbar ist. Gute Ergebnisse wurden mit einem Scherenheber erreicht. Diese haben den Vorteil, dass sie in der tiefsten Stellung sehr flach gebaut sind, und so die Zeltplattform im fahrbereiten Zustand des Personenwagens sehr nahe an das Personenwagendach gebracht werden kann. Dennoch ist ein Scherenheber über eine grosse Höhe stufenlos verstellbar und kann grosse Lasten anheben.

In einigen Ausführungsformen kann die Plattform eine Neigungsanzeige aufweisen, mit welcher eine horizontale Lage der Zeltplattform von Auge feststellbar ist. Auf diese Weise kann die Zeltplattform ohne zusätzliche Hilfsmittel, wie z.B. eine herkömmliche Wasserwaage, nivelliert werden.

In einigen Ausführungsformen kann der Dachzeltträger einen Tragrahmen aufweisen, welcher fest mit der vorderen Querstrebe und der hinteren Querstrebe verbunden ist, wobei die Hebeeinrichtungen am Tragrahmen befestigt sind.

In einigen Ausführungsformen können die Hebeeinrichtungen in einem Rechteck angeordnet sein.

In einigen Ausführungsform kann der Dachzeltträger ein Dachzelt umfassen, welches auf der Zeltplattform befestigt ist.

Die Erfindung betrifft weiter ein Dachzelt mit einem Dachzeltträger, wie er voran beschrieben ist.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: eine Seitenansicht (a) und eine Vorderansicht (b) eines Personenwagens mit einem Dachzeltträger in einer Grundstellung; und
- Fig. 2: eine Seitenansicht (a) und eine Vorderansicht (b) eines Personenwagens mit einem nivellierten Dachzeltträger.

### Wege zur Ausführung der Erfindung

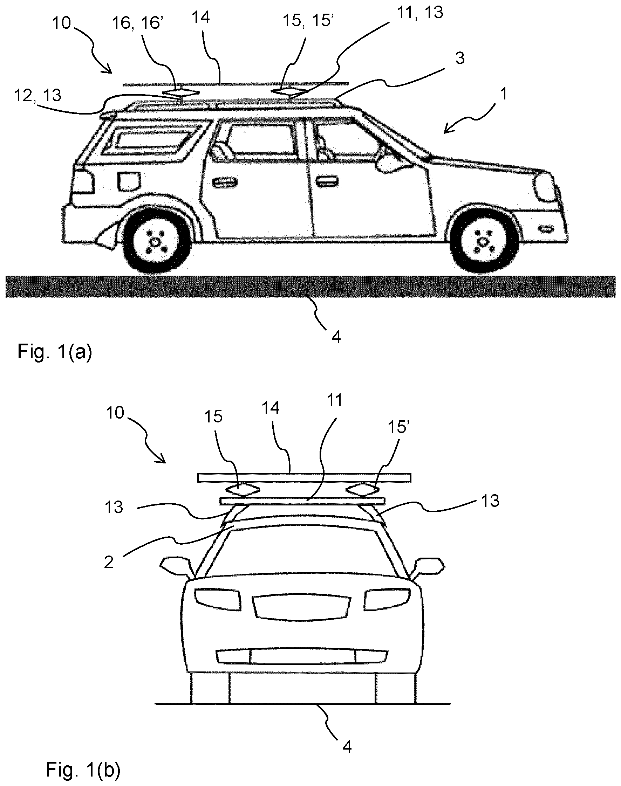

Fig 1 zeigt unter (a) eine Seitenansicht und unter (b) eine Vorderansicht eines Personenwagens 1 mit einem Dachzeltträger 10. Der Dachzeltträger für einen Personenwagen umfasst eine nivellierbare Oberkonstruktion 14, auf welcher ein Dachzelt montiert oder montierbar ist. In den Figuren ist das Dachzelt nicht dargestellt. Die Oberkonstruktion 14 ist in der gezeigten Darstellung eine eben Zeltplattform 14.

Weiter umfasst der Dachzeltträger 10 eine vordere Querstrebe 11 und eine hintere Querstrebe 12. Die beiden Querstreben 11, 12 sind beidseitig jeweils mit Befestigungsvorrichtungen 13 versehen, mit welchen die Querstreben 11, 12 direkt an einem Personenwagendach 2 oder an dafür vorgesehene Dachrelinge 3 befestigt werden kann. Dies können herkömmlich ausgestalte Befestigungseinrichtungen sein, welche an standardisierten Dachrelingen befestigbar sind.

Weiter umfasst der Dachzeltträger zwei vordere Hebeeinrichtungen 15, 15' und zwei hintere Hebeeinrichtungen 16, 16'. Die beiden vorderen Hebeeinrichtungen 15, 15' sind in der gezeigten Ausführungsform auf dem vorderen Querträger 11 befestigt. Die beiden hinteren Hebeeinrichtungen 16, 16' sind in der gezeigten Ausführungsform auf dem hinteren Querträger 12 befestigt. Alternativ kann auf den beiden Querträgern 11, 12 ein Trägerrahmen befestigt sein, auf welchem die Hebeeinrichtungen befestigt sind.

Die Hebeeinrichtungen sind unabhängig voneinander höhenverstellbar, vorzugsweise stufenlos höhenverstellbar. In der Regel können sie um mindestens 15 cm, vorzugsweise mindestens 20 cm in der Höhe verstellt werden.

Die nivellierbare Oberkonstruktion in Form einer Zeltplattform 14 ist auf den vier Hebeeinrichtungen 15, 15', 16, 16' befestigt. Um bei der Einstellung der Höhe allfällige Spannungen zu vermeiden, kann die Zeltplattform 14 gelenkig mit dem Hebeeinrichtungen 15, 15', 16, 16' verbunden sein.

Die Oberkonstruktion kann auch eine erste, obere Querstrebe, die mit den zwei vorderen Hebeeinrichtungen 15, 15' verbunden ist, und eine zweite, obere Querstrebe, die mit den zwei hinteren Hebeeinrichtungen 16, 16' verbunden ist, umfassen. Eine Möglichkeit ist, dass die Oberkonstruktion zwei seitliche Längsstreben umfasst, die jeweils mit einer hinteren Hebeeinrichtung 16, 16' und einer vorderen Hebeeinrichtung 15, 15' verbunden sind.

Fig 1(a) und Fig. 1(b) zeigen den Dachzeltträger 10 jeweils in seiner Grundstellung mit eingefahrenen Hebeeinrichtungen 15, 15', 16, 16'. In dieser Grundeinstellung liegt die Zeltplattform 14 nach am Autodach 2 und der Personenwagen ist fahrbereit.

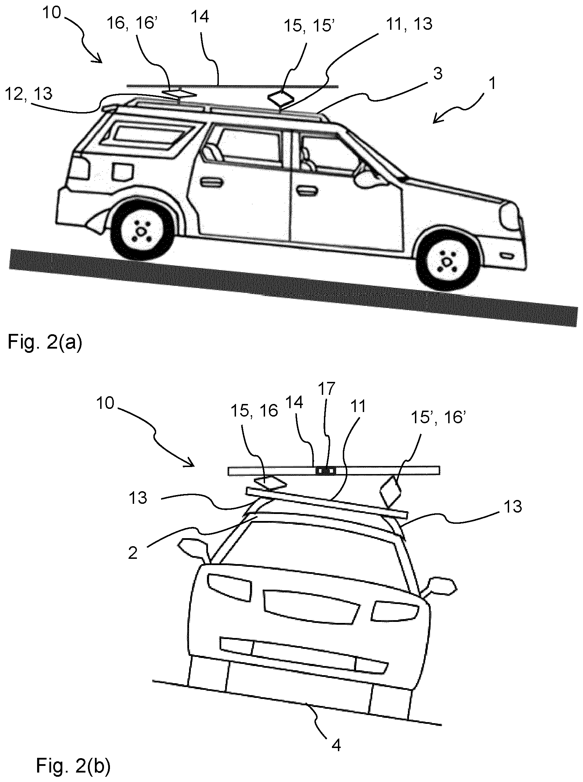

Fig 2 zeigt unter (a) eine Seitenansicht und unter (b) eine Vorderansicht eines Personenwagens 1 mit einem Dachzeltträger 10, wobei der Personenwagen 1 auf eine geneigten Untergrund 4 geparkt ist. Die Zeltplattform 14 wäre in der Grundstellung ebenfalls geneigt und ein erholsamer Schlaf im Dachzelt wäre kaum möglich. Um die Zeltplattform 14 resp. das Dachzelt zu nivellieren, werden nun die entsprechenden Hebeeinrichtungen 15, 15', 16, 16' betätigt, so dass die Zeltplattform an den entsprechenden Ecken angehoben wird, bis sie in eine horizontale Lage gebracht ist. In Fig. 2(a) ist der Personenwaagen 1 mit der Vorderseite nach unten geneigt. Um die Zeltplattform 14 zu nivellieren werden nun die beiden vorderen Hebeeinrichtungen 15, 15' betätigt und die Vorderseite der Zeltplattform 14 wir angehoben, bis die Zeltplattform 14 in einer horizontalen Lage ist. In Fig. 2(b) ist der Personenwaagen 1 zur Seite geneigt. Um die Oberkonstruktion 14 mit dem Dachzelt resp. die Zeltplattform zu nivellieren, werden nun die entsprechenden Hebeeinrichtungen, in der Fig. 2(b) die in Fahrtrichtung rechts angeordneten Hebeeinrichtungen 15', 16', betätigt, so dass die Zeltplattform 14 an den entsprechenden Ecken angehoben wird, bis sie in eine horizontale Lage gebracht ist.

Selbstverständlich kann der Personenwaagen 1 auch eine Mischform dieser beiden Grundneigungen aufweisen und entsprechend werden die Hebeeinrichtungen 15, 15', 16, 16' derart betätigt, bis die gewünschte horizontale Ausrichtung der Zeltplattform 14 erreicht ist.

Gute Ergebnisse wurden mit einer Hebeeinrichtung 15, 15', 16, 16' in Form von Scherenhebern erreicht. Diese sind in Grundstellung sehr flach gebaut und die Zeltplattform 14 liegt auf diese Weise im fahrbereiten Zustand des Personenwagens 1 nahe am Personenwagendach 2. In den Figuren sind solche Scherenheber schematisch als Raute dargestellt.

In Fig 2(b) ist zudem eine Neigungsanzeige 17 dargestellt, welche in der Ausführungsform an der vorderen Stirnseite der Zeltplattform 14 angeordnet ist. Selbstverständlich kann diese auch zusätzlich an der Seite angeordnet sein.

### Bezeichnungsliste

- 1: Personenwagen
- 2: Autodach
- 3: Dachreling
- 3: Untergrund
- 10: Dachzeltträger
- 11: vordere Querstrebe
- 12: hintere Querstrebe
- 13: Befestigungsvorrichtung
- 14: Oberkonstruktion, Zeltplattform
- 15, 15': vordere Hebeeinrichtung
- 16, 16': hintere Hebeeinrichtung
- 17: Neigungsanzeige

## Patentansprüche

1. Dachzeltträger (10) für einen Personenwagen (1) umfassend eine vordere Querstrebe (11) und eine hintere Querstrebe (12), wobei die vordere Querstrebe (11) und die hintere Querstrebe (12) jeweils an beiden Enden eine Befestigungsvorrichtung (13) zur Befestigung der Querstreben (11, 12) direkt am Personenwagendach oder an zwei fest am Personenwagendach montierten Dachrelingen (2) aufweist, **dadurch gekennzeichnet, dass** der Dachzeltträger (10) weiter eine nivellierbare Oberkonstruktion (14), auf welcher ein Zelt montiert oder montierbar ist, zwei vordere Hebeeinrichtungen (15, 15') und zwei hintere Hebeeinrichtungen (16, 16') umfasst, wobei die zwei vorderen Hebeeinrichtungen (15, 15') und die zwei hinteren Hebeeinrichtungen (16, 16') zur Nivellierung der Oberkonstruktion (14) jeweils zwischen der Oberkonstruktion (14) und der vorderen Querstrebe (11) respektive der hinteren Querstrebe (12) angeordnet sind, wobei die Hebeeinrichtungen jeweils unabhängig voneinander höhenverstellbar sind und wobei die Oberkonstruktion (14) eine Zeltplattform ist, welche mit den zwei vorderen Hebeeinrichtungen und mit den zwei hinteren Hebeeinrichtungen verbunden ist.

2. Dachzeltträger (10) nach Anspruch 1, **dadurch gekennzeichnet, dass** die Oberkonstruktion (14) eine erste, obere Querstrebe, die mit den zwei vorderen Hebeeinrichtungen (15, 15') verbunden ist, und eine zweite, obere Querstrebe, die mit den zwei hinteren Hebeeinrichtungen (16, 16') verbunden ist, umfasst.

3. Dachzeltträger (10) nach Anspruch 1, **dadurch gekennzeichnet, dass** die Oberkonstruktion zwei seitliche Längsstreben umfasst, die jeweils mit einer hinteren Hebeeinrichtung (16, 16') und einer vorderen Hebeeinrichtung (15, 15') verbunden sind.

4. Dachzeltträger (10) nach einem der vorangehenden Ansprüche, **dadurch gekennzeichnet, dass** die Hebeeinrichtungen (15, 15', 16, 16') jeweils um mindestens 15 cm, vorzugsweise mindestens 20 cm höhenverstellbar ausgebildet sind.

5. Dachzeltträger (10) nach einem der vorangehenden Ansprüche, **dadurch gekennzeichnet, dass** die Oberkonstruktion (14) gelenkig auf den Hebeeinrichtungen (15, 15', 16', 16') gelagert ist.

6. Dachzeltträger (10) nach einem der vorangehenden Ansprüche, **dadurch gekennzeichnet, dass** die Hebeeinrichtung (15, 15', 16', 16') stufenlos höhenverstellbar ist.

7. Dachzeltträger (10) nach einem der vorangehenden Ansprüche, **dadurch gekennzeichnet, dass** die Hebeeinrichtung (15, 15', 16', 16') ein Scherenheber ist.

8. Dachzeltträger (10) nach einem der vorangehenden Ansprüche, **dadurch gekennzeichnet, dass** die Oberkonstruktion (14) eine Neigungsanzeige (17) aufweist, mit welcher eine horizontale Lage der Oberkonstruktion (14) von Auge feststellbar ist.

9. Dachzeltträger (10) nach einem der vorangehenden Ansprüche, **dadurch gekennzeichnet, dass** der Dachzeltträger einen Tragrahmen aufweist, welcher fest mit der vorderen Querstrebe (11) und der hinteren Querstrebe (12) verbunden ist, wobei die Hebeeinrichtungen (15, 15', 16, 16') am Tragrahmen befestigt sind.

10. Dachzeltträger (10) nach einem der vorangehenden Ansprüche, **dadurch gekennzeichnet, dass** die Hebeeinrichtungen (15, 15', 16, 16') in einem Rechteck angeordnet sind.

11. Dachzeltträger (10) nach einem der vorangehenden Ansprüche, **dadurch gekennzeichnet, dass** der Dachzeltträger ein Dachzelt umfasst, welches auf der Zeltplattform befestigt ist.

12. Dachzelt mit einem Dachzeltträger nach einem der Ansprüche 1 bis 10.

## Claims

1. A roof tent rack (10) for a passenger car (1), comprising a front cross brace (11) and a rear cross brace (12), wherein both respective ends of the front cross brace (11) and the rear cross brace (12) have an attachment device (13) for attaching the cross braces (11, 12) directly to the passenger car roof or to two roof rails (2) securely mounted to the passenger car roof, **characterized in that** the roof tent rack (10) further comprises a levelable upper structure (14), on which a tent is or can be mounted, two front lifting devices (15, 15') and two rear lifting devices (16, 16'), wherein the two front lifting devices (15, 15') and the two rear lifting devices (16, 16') are each arranged between the upper structure (14) and the front cross brace (11) or the rear cross brace (12) for leveling the upper structure (14), wherein the lifting devices are each independently height adjustable, and wherein the upper structure (14) is a tent platform, which is connected with the two front lifting devices and with the two rear lifting devices.

2. The roof tent rack (10) according to claim 1, **characterized in that** the upper structure (14) comprises a first, upper cross brace that is connected with the two front lifting devices (15, 15'), and a second, upper cross brace that is connected with the two rear lifting devices (16, 16').

3. The roof tent rack (10) according to claim 1, **characterized in that** the upper structure comprises two lateral longitudinal braces, which each are connected with a rear lifting device (16, 16') and a front lifting device (15, 15').

4. The roof tent rack (10) according to one of the preceding claims, **characterized in that** the lifting devices (15, 15', 16, 16') are each height adjustable in design by at least 15 cm, preferably at least 20 cm.

5. The roof tent rack (10) according to one of the preceding claims, **characterized in that** the upper structure (14) is hinged to the lifting devices (15, 15', 16, 16').

6. The roof tent rack (10) according to one of the preceding claims, **characterized in that** the lifting device (15, 15', 16, 16') is steplessly height adjustable.

7. The roof tent rack (10) according to one of the preceding claims, **characterized in that** the lifting device (15, 15', 16, 16') is a scissor jack.

8. The roof tent rack (10) according to one of the preceding claims, **characterized in that** the upper structure (14) has an inclination indicator (17), with which a horizontal position of the upper structure (14) can be detected by eye.

9. The roof tent rack (10) according to one of the preceding claims, **characterized in that** the roof tent rack has a support frame that is securely connected with the front cross brace (11) and the rear cross brace (12), wherein the lifting devices (15, 15', 16, 16') are fastened to the support frame.

10. The roof tent rack (10) according to one of the preceding claims, **characterized in that** the lifting devices (15, 15', 16, 16') are arranged in a rectangle.

11. The roof tent rack (10) according to one of the preceding claims, **characterized in that** the roof tent rack comprises a roof tent that is fastened to the tent platform.

12. Roof tent with a roof tent rack according to one of claims 1 to 10.

## Revendications

1. Support de tente de toit (10) pour un véhicule de tourisme (1) comprenant une traverse avant (11) et une traverse arrière (12), sachant que la traverse avant (11) et la traverse arrière (12) comportent respectivement aux deux extrémités, un dispositif de fixation (13) pour la fixation des traverses (11, 12) directement sur le toit du véhicule de tourisme ou sur deux galeries (2) montées sur le toit du véhicule de tourisme **caractérisé en ce que** le support de tente de toit (10) comprend en plus une structure supérieure (14) pouvant être mise à niveau, sur laquelle est montée ou peut être montée une tente, deux dispositifs de levage avant (15, 15') et deux dispositifs de levage arrière (16, 16'), sachant que les deux dispositifs de levage avant (15, 15') et les deux dispositifs de levage arrière (16, 16') sont respectivement disposés entre la structure supérieure (14) et la traverse avant (11) par rapport à la traverse arrière (12) pour la mise à niveau de la structure supérieure (14), sachant que les dispositifs de levage peuvent être réglés en hauteur respectivement, indépendamment l'un de l'autre et sachant que la structure supérieure (14) est une plateforme de tente, laquelle est reliée aux deux dispositifs de levage avant et aux deux dispositifs de levage arrière.

2. Support de tente de toit (10) selon la revendication 1, **caractérisé en ce que** la structure supérieure (14) comprend une première traverse supérieure, qui est reliée aux deux dispositif de levage avant (15, 15') et une deuxième traverse supérieure, qui est reliée aux deux dispositifs de levage arrière (16, 16').

3. Support de tente de toit (10) selon la revendication 1, **caractérisé en ce que** la structure supérieure comprend deux longerons latéraux, qui sont reliés à un dispositif de levage arrière (16, 16') et un dispositif de levage avant (15, 15').

4. Support de tente de toit (10) selon l'une quelconque des revendications précédentes, **caractérisé en ce que** les dispositifs de levage (15, 15', 16, 16') sont respectivement constitués réglables en hauteur d'au moins 15 cm, de préférence d'au moins 20 cm.

5. Support de tente de toit (10) selon l'une quelconque des revendications précédentes, **caractérisé en ce que** la structure supérieure (14) est logée de façon articulée sur les dispositifs de levage (15, 15', 16, 16').

6. Support de tente de toit (10) selon l'une quelconque des revendications précédentes, **caractérisé en ce que** le dispositif de levage (15, 15', 16, 16') peut être progressivement réglable en hauteur.

7. Support de tente de toit (10) selon l'une quelconque des revendications précédentes, **caractérisé en ce que** le dispositif de levage (15, 15', 16, 16') est un élévateur ciseaux.

8. Support de tente de toit (10) selon l'une quelconque des revendications précédentes, **caractérisé en ce que** la structure supérieure (14) comporte un affichage d'inclinaison (17) avec lequel une position horizontale de la structure supérieure (14) peut être visuellement constatée.

9. Support de tente de toit (10) selon l'une quelconque des revendications précédentes, **caractérisé en ce que** le support de tente de toit comporte un cadre de support, lequel est fermement relié à la traverse avant (11) et à la traverse arrière (12), sachant que les dispositifs de levage (15, 15', 16, 16') sont fixés au cadre de support.

10. Support de tente de toit (10) selon l'une quelconque des revendications précédentes, **caractérisé en ce que** les dispositifs de levage (15, 15', 16, 16') sont disposés dans un rectangle.

11. Support de tente de toit (10) selon l'une quelconque des revendications précédentes, **caractérisé en ce que** le support de tente de toit comprend une tente de toit, laquelle est fixée sur la plateforme de tente.

12. Tente de toit avec un support de tente de toit selon l'une quelconque des revendications 1 à 10.
